# EUROPEAN PATENT SPECIFICATION

(11) **EP 3 802 892 B1**
(45) Date of publication and mention of the grant of the patent: **30.08.2023**
(21) Application number: 19812583.3
(22) Date of filing: 30.05.2019
(51) Int. Cl.: C22B 26/12, C01B 25/30, C01D 15/06

(54) **PROCESS FOR RECOVERING LITHIUM PHOSPHATE AND LITHIUM SULFATE FROM LITHIUM-BEARING SILICATES**
VERFAHREN ZUR GEWINNUNG VON LITHIUMPHOSPHAT UND LITHIUMSULFAT AUS LITHIUMHALTIGEN SILIKATEN
PROCÉDÉ DE RÉCUPÉRATION DE PHOSPHATE DE LITHIUM ET DE SULFATE DE LITHIUM À PARTIR DE SILICATES CONTENANT DU LITHIUM

(30) Priority: 30.05.2018 AU 2018901929; 21.12.2018 AU 2018904919
(43) Date of publication of application: 14.04.2021
(73) Proprietor: Lithium Australia NL, West Perth, Western Australia 6005 (AU); AUSTRALIAN NUCLEAR SCIENCE & TECHNOLOGY ORGANISATION, Lucas Heights New South Wales 2234 (AU)
(72) Inventor: NAPIER, Andrew, Perth, Western Australia 6005 (AU); GRIFFITH, Christopher, Lucas Heights, New South Wales 2234 (AU)
(74) Representative: Dehns
(86) International application number: PCT/AU2019/050541
(87) International publication number: WO 2019/227158

(56) References cited:
- WO-A1-2016/054683
- WO-A1-2017/139852
- WO-A1-2018/027266
- WO-A1-2018/070726
- WO-A1-2018/070726
- AU-A4- 2016 101 526
- CN-A- 107 188 205
- CN-A- 107 196 007
- KR-B1- 101 771 596
- KR-B1- 101 803 380
- US-B2- 9 598 291

## Description

### Technical Field

The present disclosure relates to a process for recovering lithium values, in particular to a process for recovering lithium phosphate and lithium sulfate from lithium-bearing materials, in particular lithium-bearing silicates.

### Background

The discussion of the background to the disclosure is intended to facilitate an understanding of the disclosure. However, it should be appreciated that the discussion is not an acknowledgement or admission that any of the material referred to was published, known or part of the common general knowledge as at the priority date of the application.

Global supply of lithium is currently sourced from brines or hard rock deposits.

In the former, lithium is concentrated as soluble salts by solar evaporation. Lithium produced from brines is generally of a low grade and, while the capital input for brine production is high, operating costs are low.

In the case of hard rock deposits conventional mining and beneficiation techniques are used to produce high grade spodumene concentrate or other mineral concentrates in which the grade is greater than that of the parent ore. It is possible to obtain lithium chemicals of technical, battery grade (99.5%) or high-purity (>99.9%) lithium carbonate from various acid-roasting and lime-roasting processes.

The acid-roasting method involves firstly decrepitation (at 1070-1090 °C) to convert α-spodumene to the more reactive β-structure, followed by sulfation using sulfuric acid at 250 °C and leaching of the calcine at 90 °C to extract lithium into solution. The lime-roasting process, on the other hand, relies on the roasting of spodumene and lime at 1030-1040 °C before waterleaching the clinker produced to recover lithium. Other routes used to extract lithium from spodumene via pressure leaching with soda ash or chlorination roasting have also been proposed.

All of these processes involve a roasting step with significant energy consumption prior to leaching. The high energy cost associated with roasting low-grade lithium concentrates has proven challenging.

There is therefore a need for alternative or improved processes to recover lithium from silicate materials.

Lithium carbonate and lithium hydroxide may be recovered from lithium silicates such as spodumene and lepidolite or from brines, salars, salt lakes, salt mines and geothermal resources. The lithium-bearing solutions from which the lithium carbonate and lithium hydroxide salts are recovered also contain other alkali metal and alkaline earth metal cations at comparable if not greater concentrations leading to separation difficulties. For example, in an evaporation process calcium will concentrate with magnesium and both alkaline earth metals have to be removed prior to separating lithium carbonate from solution. Similarly, sodium and potassium salts are also difficult to separate from such mixed metal solutions. Recovery processes are consequently designed to manage relative ratios of magnesium, calcium, sodium and potassium such that undesirable impurities are either rejected during processing or remain in solution and viable quantities of the desired lithium salts at required purities are precipitated.

WO2018/070726A1 discloses a process for preparing a lithium compound, comprising preparing a lithium phosphate; mixing the lithium phosphate with sulfuric acid to obtain a mixture; converting the lithium phosphate into lithium sulfate through a reaction in the mixture; and separating the lithium sulfate in a solid phase.

It would be economically beneficial if the alkali metal and alkaline earth metal cations in the lithium-bearing solutions could be recovered as saleable by-products or recycled for use in the process upstream.

Moreover, the solubility of lithium carbonate and lithium hydroxide in water is 1.3g/100 mL at 25 °C and 12.7g/100 mL at 25 °C, respectively. Consequently, the recovery of these salts as solids from pregnant liquors may require complex multi-stage processes to concentrate the solutions to above the solubility limits of these lithium salts. Evaporation to either handle the water balance or crystallise soluble salts such as hydroxide in conventional lithium (Li) processing circuits is energy and capital intensive. This problem is compounded where the tenor or grade of lithium is low in the source of interest.

Accordingly, there is also a need for alternative or improved processes to recover lithium from silicate materials which would allow either the recovery of alkali metal and alkaline earth metal salts as saleable by-products or recycle them for use in the process upstream.

### Summary

The present disclosure provides a process for recovering lithium values, in particular to a process for recovering lithium phosphate and lithium sulfate from a lithium-bearing silicate.

The process for recovering lithium phosphate and lithium sulfate from a lithium-bearing silicate comprises the steps of:
a) adding from 800 kg/t to 1600 kg/t of sulfuric acid to a slurry of the lithium-bearing silicate and from 40 kg/t to 600 kg/t of a source of fluoride to produce a leach mixture and heating said leach mixture;
b) separating a lithium-bearing solution from the leach mixture;
c) increasing pH of the separated lithium-bearing solution sequentially to pH 3.5 to 4, pH 5.5 to 6 then pH 10.5 to 11 to precipitate, respectively, a first, second and third set of impurities therefrom;
d) separating said first, second and third sets of impurities from the lithium-bearing solution produced in step c);
e) adding lime to the separated lithium-bearing solution produced in step d) to maintain a soluble Ca concentration of at least 30 mg/L;
f) adding a first amount of phosphate to the separated lithium-bearing solution produced in stepe) to precipitate fluorapatite, and separating and optionally recycling said fluorapatite to step a) for use as the source of fluoride;
g) adding a second amount of phosphate to the separated lithium-bearing solution after step f) to precipitate apatite, and separating said apatite;
h) adding a third amount of phosphate to the separated lithium-bearing solution after step g) to precipitate lithium phosphate and produce a lithium-depleted solution;
i) separating the lithium phosphate precipitate from the lithium-depleted solution produced in step h);
j) precipitating lithium sulfate from a digestion mixture comprising the separated lithium phosphate precipitate and sulfuric acid and separating lithium sulfate from the digestion mixture; and
k) adding alkali metal hydroxide to the separated solution from step j) to produce an alkali metal phosphate solution and recycling the alkali metal phosphate solution to any one of more of steps f), g) and h) for use as the phosphate.

In various embodiments, the slurry of the lithium-bearing silicate and the source of fluoride may have a solids density in a range of 20-50 wt%, in particular 30-40 wt%.

In one embodiment, the leach mixture may be heated to a temperature from 70 °C to a boiling point of the leach mixture, in particular 90 to 105 °C. The leach mixture may be heated for a period of 1-36 h, in particular 12-24 h.

In one embodiment, the source of fluoride may be a fluoride salt, a fluoride-containing salt or hydrofluoric acid. In an alternative embodiment, the source of fluoride may be a fluoride-bearing substance which generates hydrofluoric acid in situ by reaction with sulfuric acid. Such fluoride-bearing substances include naturally occurring minerals with fluoride as a major anion in its crystal lattice.

The process may achieve Li extraction from the lithium-bearing silicate into the lithium-bearing solution of > 80%, >85%, > 90%, >95%, or even >98%.

In some embodiments, prior to step c), the lithium-bearing solution may undergo a pre-neutralisation step comprising increasing the pH of the lithium-bearing solution to pH 1.0-1.5.

Increasing the pH of the lithium-bearing solution may comprise adding base to the lithium-bearing solution. In some embodiments the base may comprise an alkali metal carbonate salt such as sodium carbonate, potassium carbonate or lithium carbonate or an alkaline earth metal carbonate salt such as calcium carbonate or magnesium carbonate. Alternatively, the base may comprise an alkali metal hydroxide or an alkaline earth metal hydroxide. In particular the base may be calcium hydroxide.

In one embodiment, the first set of impurities comprises one or more of Al, F, Fe, Cs and/or Rb-containing solids. For example, the first set of impurities may comprise any one or more of alunites of potassium, sodium cesium and rubidium, aluminium trifluoride and iron hydroxides.

In one embodiment, the second set of impurities comprises Al-containing solids with co-precipitation of lithium. For example, the second set of impurities may comprise any one or more of aluminium trifluoride, aluminium hydroxide and cryolite phases. Consequently, in some embodiments, the separated second set of impurities may be recycled to step a) and added to the slurry to minimise overall lithium losses.

In one embodiment, the third set of impurities comprises one or more Al, Mg, Mn and/or Si-containing solids. For example the third set of impurities may comprise one or more of Mg(OH)₂, Mn(OH)₂, and other metal hydroxides.

In one embodiment, lime and the first amount of phosphate may be added simultaneously to the lithium-bearing solution produced in step d).

Lime may be added as a lime slurry (10-30 wt%) to achieve a soluble calcium concentration of at least 30 mg/L, in particular a soluble calcium concentration in a range of 100 mg/L to 300 mg/L.

In one embodiment, the first amount of phosphate added to the separated lithium-bearing solution produced in step e) is sufficient to produce fluorapatite and deplete a fluoride content of said lithium-bearing solution to less than 5 mg/L, in particular less than 1 mg/L.

In one embodiment, the second amount of phosphate is sufficient to reduce a soluble calcium content of said lithium-bearing solution to less than 25 mg/L, in particular to less than 20 mg/L, or even to less than 5 mg/L.

In one embodiment, the third amount of phosphate is in stoichiometric excess so that the lithium-depleted solution has a Li content less than 500 mg/L and/or residual phosphate (P) content greater than 100 mg/L. In some embodiments, the soluble lithium remaining in solution may be 50-100 mg/L and P remaining in solution may be 500-3000 mg/L.

In one embodiment, prior to step j), the lithium phosphate precipitate may be re-precipitated from phosphoric acid. In this way, major impurities such as K, Na, and S may be reduced by an order of magnitude.

In one embodiment, the digestion mixture in step j) may comprise from 10-50 wt% lithium phosphate solids with lithium remaining in solution up to solubility limits of lithium sulfate in phosphoric acid, in particular between 30-35 g/L.

In some embodiments, the digestion mixture is heated to a temperature from ambient to 80 °C for 1-4 h, in particular for 2 h.

In some embodiments, the digestion mixture may be concentrated to provide a H₃PO₄ concentration of up to 70 wt%, in particular 25-65 wt% H₃PO₄.

In some embodiments, the process may further comprise:
step I) recovering phosphate from the separated lithium-depleted solution as tri-calcium phosphate and/or apatite. In these embodiments, recovering phosphate from the separated lithium-depleted solution as tri-calcium phosphate and/or apatite may comprise adding calcium hydroxide to said lithium-depleted solution and separating the tri-calcium phosphate and/or apatite therefrom.

In further embodiments, the process may further comprise:
step m) recovering potassium from the separated solution from step I) as potassium sulfate. In these particular embodiments, recovering potassium from the separated solution from step I) as potassium sulfate comprises concentrating and/or cooling the separated solution from step I) and subsequently separating potassium sulfate.

### Brief Description of Drawings

Notwithstanding any other forms which may fall within the scope of the process as set forth in the Summary, specific embodiments will now be described, by way of example only, with reference to the accompanying figures in which:

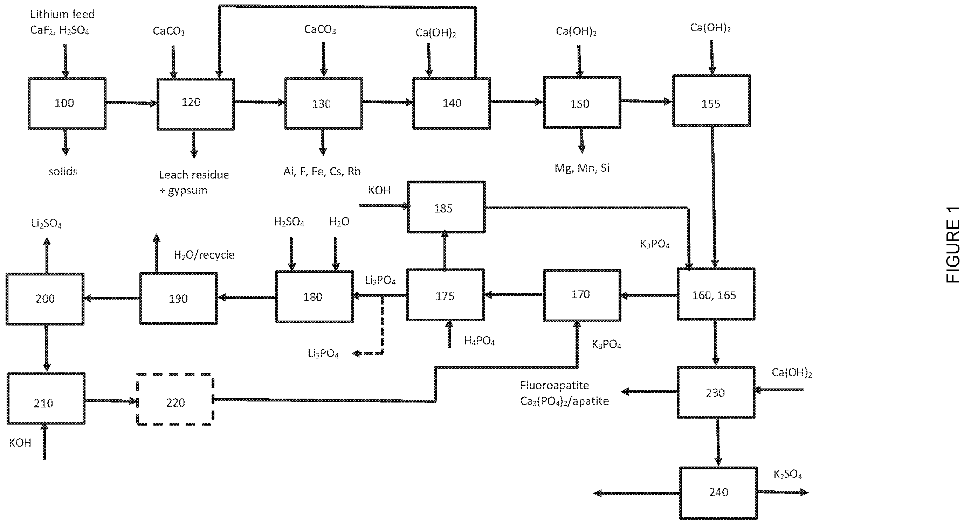

Figure 1 is a process flow sheet depicting a process for producing lithium phosphate and lithium sulfate from a lithium-bearing silicate.

### Description of Embodiments

The disclosure relates to a process to produce lithium phosphate and/or lithium sulfate from a lithium-bearing silicate.

### GENERAL TERMS

Throughout this specification, unless specifically stated otherwise or the context requires otherwise, reference to a single step, composition of matter, group of steps or group of compositions of matter shall be taken to encompass one and a plurality (i.e. one or more) of those steps, compositions of matter, groups of steps or groups of compositions of matter. Thus, as used herein, the singular forms "a", "an" and "the" include plural aspects unless the context clearly dictates otherwise. For example, reference to "a" includes a single as well as two or more; reference to "an" includes a single as well as two or more; reference to "the" includes a single as well as two or more and so forth.

Each example of the present disclosure described herein is to be applied *mutatis mutandis* to each and every other example unless specifically stated otherwise. The present disclosure is not to be limited in scope by the specific examples described herein, which are intended for the purpose of exemplification only. Functionally-equivalent products, compositions and methods are clearly within the scope of the disclosure as described herein.

The term "and/or", e.g., "X and/or Y" shall be understood to mean either "X and Y" or "X or Y" and shall be taken to provide explicit support for both meanings or for either meaning.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. In case of conflict, the present specification, including definitions, will control. In addition, the materials, methods, and examples are illustrative only and not intended to be limiting.

### SPECIFIC TERMS

The term "lithium bearing silicate" as used herein refers to a concentrate, ore, or tailings derived from one or more silicate minerals containing lithium values. Exemplary lithium bearing silicates include, but are not limited to, jadarite, spodumene and other pyroxenes, trilithionite, petalite and other lithium-bearing silicates from the nepheline group of minerals, holmquistite and other lithium-bearing silicates from the amphibole group of minerals, lepidolite, zinnwaldite, elbaite and other tourmalines, chlorites, smectites, lithium-containing micas, and lithium-containing clays. Several metals, such as Mn, Rb and Cs, and other minerals such as quartz, albite, feldspar, topaz and beryl may also be associated with these lithium minerals. The term "lithium-bearing silicate" encompasses high grade ores and concentrates as well as medium to low grade ores, concentrates, uneconomic ores and blends thereof.

The term 'HF eq.' as used herein refers to an amount of the source of fluoride, other than hydrofluoric acid (HF), which would provide an equivalent amount of HF when converted to the free acid form by reaction with a mineral acid such as sulfuric acid.

A reference to 'g/kg' or 'kg/t' throughout the specification refers to the mass of a substance per kilogram or tonne, respectively, of the lithium-bearing silicate.

The term ' boiling point" is used to refer to the temperature at which a liquid or slurry boils under the particular pressure to which it is being subjected. It will be appreciated that the boiling point may also vary according to the various solutes in the liquid or slurry and their concentration.

The term 'apatite' as used herein refers to one or more calcium phosphate compounds of general formula Ca₅(PO₄)₃(F, Cl, OH) (repeating unit) and may include hydroxyapatite, fluorapatite, chlorapatite or admixtures thereof.

### PROCESS FOR RECOVERING LITHIUM PHOSPHATE AND LITHIUM SULFATE

The present disclosure relates to a process for recovering lithium phosphate and lithium sulfate from lithium bearing materials, in particular lithium-bearing silicates including but not limited to pyroxenes (such as spodumene), the nepheline group (such as petalite), amphiboles (such as homquistite), tourmalines *such as elbaite), micas *such as lepidolite and zinnwaldite), chlorites and smectites.

Prior to undergoing the processes described herein, the lithium-bearing silicate may be ground and milled to P₁₀₀ <150 µm. In certain embodiments the lithium-bearing material may have a particle size with P₈₀ in a range of 10-110 µm, 38-106 µm, or in the range of 10-50 µm. The lithium-bearing material may be ground and milled to the desired particle size by conventional techniques well known in the art in a dry milling process or a wet milling process. In some embodiments, a flotation concentrate may then be prepared according to conventional techniques.

Referring to the accompanying figure, lithium values may be extracted from the lithium-bearing silicate to produce a lithium-bearing solution (LBS), otherwise known as a pregnant liquor (PLS), by adding (100) from 800 kg/t to 1600 kg/t of sulfuric acid, in particular 1000 kg/t to 1400 kg/t sulfuric acid, to a slurry of the lithium bearing silicate and from 40 kg/t to 600 kg/t of a source of fluoride, in particular 100 kg/t to 180 kg/t of a source of fluoride, to produce a leach mixture.

In various embodiments, the slurry may have a solids density of 20-50 wt%, in particular a solids density of 30-40 wt %.

The source of fluoride may be a fluoride salt, in particular an alkali metal fluoride salt or an alkaline earth metal fluoride salt, or hydrofluoric acid. Illustrative examples of suitable fluoride salts include sodium fluoride, potassium fluoride, ammonium fluoride, calcium fluoride, aluminium fluoride or mixtures thereof. Alternatively, the source of fluoride may be hydrofluoric acid or a fluoride-containing salt such as fluorapatite, lithium fluorosilicates and so forth.

Alternatively, or additionally the source of fluoride may be a fluoride-bearing substance which generates hydrofluoric acid by reaction with sulfuric acid. Such fluoride-bearing substances include naturally occurring minerals with fluoride as a major anion in its crystal lattice, such as aluminium hexafluoride, sodium hexafluorosilicates, or other mixed aluminium fluoride or fluorosilicate complexes. It will be appreciated that any fluoride-containing precipitate separated from the lithium-bearing solution in a downstream impurity removal process step, in particular an impurity removed to produce a fluoride-depleted lithium-bearing solution, may be recycled and used as a source of fluoride in step a) of the process as described herein.

The leach mixture may be heated for a period of time sufficient to achieve a particular level of extraction of lithium into the leach mixture. The period of time depends upon the mineralogy and particle size of the lithium-bearing material, the concentration of the source of fluoride, the concentration of sulfuric acid, the solids density of the slurry, and the temperature at which the leach mixture is heated.

The leach mixture may be heated to a temperature from 70 °C to a boiling point of the leach mixture, in particular 90 °C to 105 °C.

The leach mixture may be heated for a period of 1-36 h, in particular for a period of 12 - 24 h.

Step a) of the process may be carried out in either a batch mode or a continuous mode. The particular choice of operation will depend upon a residence time necessary to extract the desired amount of lithium values from the leach mixture and the throughput volumes of a process plant.

Step a) of the process may achieve Li extraction from the lithium-bearing silicate into the leach mixture of > 80%, >85%, > 90%, >95%, or even >98%. In various embodiments of the disclosure, it will be understood that the concentration of lithium in the lithium-bearing solution may be greater than 0.5 g/L, in particular 3 to 8 g/L.

Solids may be removed from the leach mixture to yield the lithium-bearing solution by any suitable conventional technique such as filtration, centrifugation, decantation and so forth.

It will be appreciated by the person skilled in the field, that one or more impurities may be co-dissolved into the leach mixture and consequently report to the lithium-bearing solution. The term "impurities" as used herein refers to a metal value, other than lithium, contained in the lithium-bearing silicate which is capable of dissolving in the leach mixture under the same process conditions of step a). Examples of typical metal values, other than lithium, include but are not limited to K, Na, Cs, Rb, Si, Al, Mg, Mn and Fe.

Prior to recovering the lithium values from the lithium-bearing solutions in the form of lithium phosphate and/or lithium sulfate, several types of impurities may be removed in a series of sequential steps where the pH of the lithium-bearing solution is increased to pH 3.5 to 4 (130), pH 5.5 to 6 (140) then pH 10.5 to 11 (150) to precipitate, respectively, a first, second and third set of impurities.

Increasing the pH of the lithium-bearing solution may comprise adding base to the lithium-bearing solution in an amount sufficient to adjust the pH of the lithium-bearing solution to the desired pH. The base may comprise an alkali metal carbonate salt such as sodium carbonate, potassium carbonate, or lithium carbonate or an alkaline earth metal carbonate salt such as calcium carbonate or magnesium carbonate. Alternatively, the base may comprise an alkali metal hydroxide or an alkaline earth metal hydroxide. In particular the base may be calcium carbonate or calcium hydroxide.

In some embodiments, prior to removing the first, second and third sets of impurities, the lithium-bearing solution may undergo a pre-neutralisation step (120) comprising increasing the pH of the lithium-bearing solution to pH 1.0-1.5 by adding base, such as calcium carbonate, thereto. The pre-neutralisation step is to neutralise bulk free sulfuric acid in the lithium-bearing solution and to minimise co-precipitation of Li values with gypsum downstream.

Typically, the first, second and third sets of impurities are respectively precipitated as either metal salts or their respective metal hydroxides.

For example, the first set of impurities comprises one or more of Al, F, Fe, Cs and/or Rb-containing solids including, but not limited to alunites of potassium, sodium cesium and rubidium, aluminium trifluoride and iron hydroxides.

In one embodiment, the second set of impurities comprises Al-containing solids with co-precipitation of lithium. The second set of impurities may comprise any one or more of aluminium trifluoride, alunite and cryolite phases. Consequently, in some embodiments, the separated second set of impurities may be recycled to step a) and added to the slurry to minimise overall lithium losses.

In one embodiment, the third set of impurities comprises one or more Al, Mg, Mn and/or Si-containing solids including, but not limited to, Mg(OH)₂, Mn(OH)₂, and metal hydroxides.

Typically, the lithium-bearing solution may have a residence time at each pH range of between 0.5 h to 8 h, in particular 1 h to 4 h to ensure sufficient time for the respective sets of impurities to form and settle.

Subsequently, the first, second and third sets of impurities may be respectively separated from the lithium-bearing solutions using conventional techniques such as filtration, centrifugation, gravity separation, decantation and so forth. Depending on the nature of the impurities, they may be converted into one or more valuable by-products. Alternatively, the separated impurities may undergo further purification processes to recover valuable by-products. As discussed previously, in embodiments where the first, second or third set of impurities contain fluoride-containing salts or substances, such fluoride-containing salts or substances may be recycled for use in step a) as an additional source of fluoride.

It will be appreciated that in embodiments where the base comprises calcium carbonate or calcium hydroxide, the lithium-bearing solution from which the first, second and third sets of impurities have been separated may have an undesirable concentration of calcium. It is conventional practice to subsequently deplete (or 'soften') the pregnant liquor of calcium by adding sodium carbonate to precipitate calcium carbonate. However, the concentration of sodium consequently also rises, thereby making it difficult to separate valuable potassium by-products from solution downstream.

The present process provides an alternative softening process step to decrease soluble calcium content of the lithium-bearing solution from approximately 500 mg/L to less than 25 mg/L, in particular less than 20 mg/L, even to less than 5 mg/L. In certain embodiments wherein the lithium-bearing solution also contains fluoride, said process may also be advantageously employed to decrease fluoride content to less than 5 mg/L, in particular to a fluoride content in a range of 1-3 mg/L.

The alternative softening process step, as will be described below, relies on the addition of phosphate to reject first fluoride as fluorapatite (Ca₅(PO₄))₃F) and then calcium from the PLS as apatite. The inventors have identified, however, that in solutions where soluble calcium concentration is less than 30 mg/L, fluorapatite may re-dissolve at temperatures of around 70 °C and over a time period of 1-4 hours, resulting in an increase in fluoride concentration and consequently an increased lithium precipitation. A higher fluoride concentration is also undesirable as it may report to lithium phosphate produced downstream. Consequently, to allow the process to be performed in a continuous mode where these reaction conditions are typically present, the inventors have proposed a counterintuitive solution, namely that the soluble calcium concentration should be at least 30 mg/L. At a soluble calcium concentration of at least 30 mg/L, the dissolution of fluorapatite is negligible under the aforementioned continuous mode conditions.

Accordingly, said process comprises the optional step of adding lime (155) to the separated lithium-bearing solution to maintain a soluble calcium concentration of at least 30 mg/L, preferably a soluble calcium concentration in a range of 100 mg/L to 300 mg/L. In one embodiment, lime may be added as a lime slurry (10-30 wt%) prior to adding a first amount of phosphate (160) to the separated LBS or, in another embodiment, lime may be added as a lime slurry (10-30 wt%) simultaneously with the first amount of phosphate. In some embodiments, the first amount of phosphate is added (160) to the separated LBS to produce calcium precipitates in particular apatite, fluorapatite and other apatitic phases. Phosphate may be added to the lithium-bearing solution at a temperature from ambient to 90 °C, in particular to less than 70 °C. The first amount of phosphate added to the separated LBS is proportional to the addition of calcium (as lime) and is calculated based on the theoretical formula for fluorapatite. It will be appreciated that in some embodiments, apatite may be the dominant phase in comparison to fluorapatite. Nevertheless, the inventors opine that it is the precipitation of fluorapatite which depletes the LBS of fluoride to desired concentrations.

In embodiments wherein the lithium-bearing solution contains remaining fluoride, management of fluoride is important because some fluoride may report to lithium phosphate produced downstream, as will be described later. The inventors have found that as well as decreasing the calcium content by producing calcium phosphate, the step of adding a first amount of phosphate to the lithium-bearing solution also produces fluorapatite (calcium fluorophosphates, Ca₅(PO₄)₃F). Production of fluorapatite not only decreases calcium content of the lithium-bearing solution but also decreases fluoride content to less than 5 mg/L, in particular 1-3 mg/L.

Phosphate may be added as an aqueous solution. The phosphate may be selected from the group comprising phosphoric acid, potassium phosphate, sodium phosphate, ammonium phosphate, or combinations thereof. It will be appreciated that the phosphate may also be a phosphate-containing stream produced by one of more downstream processes which may be subsequently recirculated in the softening process described herein.

For example, potassium phosphate may be added to the lithium-bearing solution as a 100 g/L to 800 g/L K₃PO₄ aqueous solution in one or more aliquots to greater than 100% stoichiometric addition (wrt fluorapatite formation), in particular 200% to 500% stoichiometric addition (wrt fluorapatite formation). There are advantages in adding a concentrated K₃PO₄ solution because it reduces the dilution of the process flow, maximises lithium phosphate precipitation downstream and minimises lithium remaining in solution in the barrens. Moreover, most of the fluoride in the lithium-bearing solution may be precipitated as fluorapatite, thereby decreasing the fluoride concentration to less than 5 mg/L, in particular 1-3 mg/L. In some embodiments, if the addition of lime is increased to about 7g/L, along with a corresponding increase in the first amount of phosphate added to the separated LBS, the fluoride concentration may be reduced to less than 1mg/L. The inventors opine that calcium fluorophosphate is the main phase that is produced during initial addition of potassium phosphate, with concurrent production of apatite and/or hydroxyapatite. The kinetics of fluorapatite precipitation is extremely rapid (< 1h) and precipitation of Li may be minimised at < 2% at this stage.

A second amount of phosphate may be subsequently added (165) to the lithium-bearing solution to precipitate calcium phosphate (apatite), thereby reducing the soluble calcium concentration to less than 20 mg/L, in particular less than 15 mg/L, or even less than 5 mg/L. The second amount of phosphate added to the separated LBS is proportional to the amount of calcium remaining in solution and is calculated based on the stoichiometry of apatite to provide a soluble calcium concentration less than 20 mg/L, or less than 15 mg/L, or even less than 5 mg/L, thereby 'softening' the lithium-bearing solution. In other words, the first amount of phosphate (160) added to the lithium-bearing solution is sufficient to reduce the fluoride concentration to less than 1 mg/L by precipitating fluorapatite, and the second amount of phosphate (165) added to the lithium-bearing solution is sufficient to precipitate apatite, thereby further reducing the solution calcium concentration to less than 25 mg/L, preferably to less than 20 mg/L, even more preferably to less than 5 mg/L.

It will be appreciated that the fluorapatite and hydroxyapatite solids separated from these sequential 'softening' steps may be recycled and used upstream to reduce lithium losses to < 0.1%.

The process as disclosed herein further comprises adding a third amount of phosphate (170) to the softened lithium-bearing solution to precipitate lithium phosphate and produce a lithium-depleted solution. Phosphate may be added as an aqueous solution. The phosphate may be selected from the group comprising phosphoric acid, potassium phosphate, sodium phosphate, or a combination thereof. It will be appreciated that the concentration of the aqueous phosphate solution will be practically limited by its solubility. For example, the concentration of an aqueous potassium phosphate solution may be from 100 g/L to 800 g/L.

The third amount of phosphate may be added to the softened lithium-bearing solution in stoichiometric excess to ensure that soluble lithium remaining in solution is less than 100 mg/L and residual P remaining in solution is greater than 500 mg/L, in particular 500 mg/L to 3000 mg/L.

Adding a third amount of phosphate (170) to the softened lithium-bearing solution to precipitate lithium phosphate may be performed at a temperature ranging from 50 °C to below boiling point of the solution, in particular to greater than 90 °C.

In embodiments wherein the phosphate comprises phosphoric acid, hydroxide ions (e.g. KOH) may be concurrently added to the lithium-bearing solution in an amount sufficient to maintain the pH of said solution above a threshold pH where lithium phosphate may re-dissolve and raise the soluble lithium in solution to greater than 100 mg/L.

Lithium phosphate precipitate may be separated from solution by conventional separation techniques and washed in several stages. Suitable separation techniques include, but are not limited to, filtration, gravity separation, centrifugation, decantation and so forth. The mother liquor and wash filtrates may be combined and undergo a de-phosphorylation step (230) as will be described later.

The separated lithium phosphate precipitate may then be optionally dried and transported for sale. Alternatively, or additionally, in some embodiments the lithium phosphate precipitate may then be treated to re-precipitate lithium phosphate thereby reducing major impurities such as K, Na and S. This particular treatment step (175) comprises at least partially dissolving lithium phosphate precipitate in phosphoric acid to form di-lithium phosphate (U₂HPO₄), according to Equations (1) and (2):

(1) Li₃PO₄ + 2H₃PO₄ → 3LiH₂PO₄

(2) 2Li₃PO₄ + H₃PO₄ → 3Li₂HPO₄

The inventors opine that although di-lithium phosphate is the dominant aqueous species and precipitates upon reaching saturation, it is thermodynamically unstable and quickly converts to lithium phosphate, thereby regenerating phosphoric acid and leaving the impurities solubilised in the resultant phosphoric acid.

Advantageously, the treatment step (175) may lead to at least an order of magnitude reduction in K, Na and S. One particular example of the reduction in impurities from test work is shown in the table below:

| | **K (%w/w)** | **Na (%w/w)** | **S (%w/w)** |
|---|---|---|---|
| **Lithium phosphate** | 0.25-0.35 | 0.15-0.25 | 0.51-0.57 |
| **Re-precipitated lithium phosphate** | 0.008 | 0.005 | 0.027 |

In some embodiments, the lithium phosphate precipitate may be mixed with phosphoric acid to produce a slurry having %solids in the range of 15-40 %wt. The amount of phosphoric acid required may be sub-stoichiometric with respect to the complete "dissolution" of the lithium phosphate precipitate as Li₂HPO₄. For example, the amount of phosphoric acid required may be in the range of 50 kg/t to 250 kg/t of lithium phosphate precipitate.

The step of re-precipitating potassium phosphate may be performed at ambient temperature or around 30 °C. The step of re-precipitating lithium phosphate may be performed for a period of between 4 h to 24 h. A residence time of about 24 h may be beneficial to achieve the maximum rejection of impurities at lower stoichiometric additions of phosphoric acid.

Recovery of lithium as re-precipitated lithium phosphate may be greater than 95%. It will be appreciated that the amount of lithium phosphate remaining soluble in the liquor from the refining step may be a function of the pH and solids content of the process stream. In one embodiment, the pH may be in a range of pH 4 - 6, in particular pH 5 - 5.5.

The re-precipitated lithium phosphate precipitate may be separated from solution by conventional separation techniques and washed in several stages. Suitable separation techniques include, but are not limited to, filtration, gravity separation, centrifugation, decantation and so forth. Potassium hydroxide may be subsequently added to the separated liquor (185) to regenerate a potassium phosphate stream. At least part of the potassium phosphate stream may then be recycled for use in one or more of steps e), f) and h) for use as a source of phosphate.

The dried, separated lithium phosphate may be stored and subsequently transported for sale, or used as a feedstock for other processes. Alternatively, or additionally, in some embodiments at least some of the dried, separated lithium phosphate may be further treated to produce lithium sulfate.

Advantageously, producing lithium sulfate may remove residual fluoride or other contaminants. In these particular embodiments, the separated lithium phosphate precipitate may be digested in sulfuric acid (180) according to Equation (3):

(3) 2Li₃PO₄ + 3H₂SO₄ → 3Li₂SO₄ + H₃PO₄

The pH of the resulting digestion mixture may be less than 3, in particular about 1.5. The digestion mixture may comprise up to 50 wt%, in particular 10-30 wt% lithium phosphate solids with between 30-35 g/L lithium in solution. Surprisingly, the extent of lithium phosphate digestion and lithium sulfate conversion does not appear to be affected by increasing solids content and some lithium sulfate crystallisation may occur during digestion without adversely affecting the purity of the resultant lithium sulfate.

It will be appreciated that the rate of digestion will depend on the temperature and concentration of lithium phosphate solids in the digestion mixture. Complete digestion may occur at temperature in a range of from ambient to 80 °C within 1 h-4 h, in particular 1 h-2 h. Typically, digestion may occur at 50 °C within 2 h.

Although it will be appreciated that there may be some lithium sulfate crystallisation during the digestion step, in various embodiments, isolation of lithium sulfate may be undertaken by an additional evaporative crystallisation step. The resulting digestion liquor may be concentrated (190) by evaporation or vacuum pressure to provide a H₃PO₄ concentration of up to 70 wt%, in particular 25-65 wt%. At H₃PO₄ concentration of greater than 60 wt %, the resultant mixtures are extremely viscous and the inventors note that between 55-60 wt% H₃PO₄ may be a practical upper limit, wherein about 80% crystallisation of lithium sulfate is achieved. At least 5% of lithium may report to the lithium sulfate crystallisation liquor. However, this can be recycled via potassium phosphate generation and back to the lithium phosphate production step (170) as described later.

The lithium sulfate precipitate (200) may be separated from the concentrated digestion liquor by conventional separation techniques. Suitable separation techniques include, but are not limited to, filtration, gravity separation, centrifugation, decantation and so forth.

The remaining filtrate (or supernatant) may be up to 70 wt% in phosphoric acid, in particular 25-65 wt%. This particular stream may then be recycled upstream as the source of phosphate to precipitate lithium phosphate. Alternatively, the remaining filtrate (or supernatant) may be neutralised (210) by addition of potassium hydroxide or a mixture of potassium carbonate and potassium hydroxide. The resulting potassium phosphate solution may, in turn, be recycled (220) upstream as the source of phosphate to precipitate lithium phosphate from the lithium-bearing solution.

In some embodiments, the filtrate and/or the supernatant from which the lithium phosphate precipitate has been separated may undergo a de-phosphorylation process (230) in which soluble phosphate remaining in the filtrate or the supernatant is recovered as tri-calcium phosphate.

The de-phosphorylation process (230) comprises adding calcium hydroxide to the filtrate or the supernatant to produce tri-calcium phosphate and/or apatite. The calcium hydroxide may be selected from a group comprising hydrated lime, quicklime, slaked lime, and mixtures thereof.

The tri-calcium phosphate and/or apatite may be separated from the concentrated resulting liquor by conventional separation techniques. Suitable separation techniques include, but are not limited to, filtration, gravity separation, centrifugation, decantation and so forth. It will be appreciated that in some embodiments calcium carbonate may co-precipitate with tri-calcium phosphate and/or apatite.

Although the liquor remaining after recovery of tri-calcium phosphate and/or apatite may be a potassium rich liquor, it may also contain low levels of sodium (less than 20 g/L Na). Potassium sulfate may be recovered from said liquor by concentrating said liquor to promote crystallisation of potassium sulfate with subsequent separation. The liquor may be concentrated to up to 10% of its original volume by evaporating the liquor at a temperature from ambient temperature to less than 120 °C. Alternatively, or additionally, crystal growth or increased particle size of potassium sulfate may be promoted by cooling the resulting concentrated liquor to about 10 °C.

The potassium sulfate may be separated from the concentrated liquor by conventional separation techniques. Suitable separation techniques include, but are not limited to, filtration, gravity separation, centrifugation, decantation and so forth.

In some embodiments, wherein the liquor remaining after recovery of tri-calcium phosphate and/or apatite is potassium-rich but also contains higher levels of sodium (greater than 20 g/L Na), it is likely that glaserite (NaK₃(SO₄)₂) may precipitate rather than potassium sulfate. While precipitation of glaserite may generally be considered undesirable, if it forms it can be separated and undergo further treatment to isolate potassium sulfate.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A process for recovering lithium phosphate and lithium sulfate from a lithium-bearing silicate comprises the steps of:
a) adding from 800 kg/t to 1600 kg/t of sulfuric acid to a slurry of the lithium-bearing silicate and from 40 kg/t to 400 kg/t of a source of fluoride to produce a leach mixture and heating said leach mixture;
b) separating a lithium-bearing solution from the leach mixture;
c) increasing pH of the separated lithium-bearing solution sequentially to pH 3.5 to 4, pH 5.5 to 6 then pH 10.5 to 11 to precipitate, respectively, a first, second and third set of impurities therefrom;
d) separating said first, second and third sets of impurities from the lithium-bearing solution produced in step c);
e) adding lime to the separated lithium-bearing solution produced in step d) to maintain a soluble calcium concentration of at least 30 mg/L;
f) adding a first amount of phosphate to the separated lithium-bearing solution produced in step e) to precipitate fluorapatite, and separating and optionally recycling said fluorapatite to step a) for use as the source of fluoride;
g) adding a second amount of phosphate to the separated lithium-bearing solution after stepf) to precipitate apatite, and separating said apatite;
h) adding a third amount of phosphate to the separated lithium-bearing solution after step g) to precipitate lithium phosphate and produce a lithium-depleted solution;
i) separating the lithium phosphate precipitate from the lithium-depleted solution produced in step h);
j) precipitating lithium sulfate from a digestion mixture comprising the separated lithium phosphate precipitate and sulfuric acid and separating lithium sulfate from the digestion mixture; and
k) adding alkali metal hydroxide to the separated solution from step j) to produce an alkali metal phosphate solution and recycling the alkali metal phosphate solution to any one or more of steps f), g) and h) for use as the phosphate.

2. The process according to claim 1, wherein the slurry of the lithium-bearing silicate and the source of fluoride has a solids density in a range of 20-50 wt%.

3. The process according to claim 1 or claim 2, wherein the leach mixture is heated to a temperature from 70 °C to a boiling point of the leach mixture and/or for a period of 1-36 h.

4. The process according to any one of the preceding claims, wherein the source of fluoride is selected from a group comprising a fluoride salt, a fluoride-containing salt, hydrofluoric acid, or a fluoride-bearing substance capable of generating hydrofluoric acid by reaction with sulfuric acid.

5. The process according to any one of the preceding claims, wherein prior to step c), the lithium-bearing solution undergoes a pre-neutralisation step comprising increasing the pH of the lithium-bearing solution to pH 1.0-1.5.

6. The process according to any one of the preceding claims, wherein the first set of impurities comprises one or more of Al, F, Fe, Cs and/or Rb-containing solids.

7. The process according to any one of the preceding claims, wherein the second set of impurities comprises Al-containing solids with co-precipitation of lithium, preferably wherein the separated second set of impurities is recycled to step a) and added to the slurry to minimise overall lithium losses.

8. The process according to any one of the preceding claims, wherein the third set of impurities comprises one or more Al, Mg, Mn and/or Si-containing solids.

9. The process according to any one of the preceding claims, wherein:
the first amount of phosphate added to the separated lithium-bearing solution produced in step e) is sufficient to produce fluorapatite and deplete a fluoride content of said lithium-bearing solution to less than 5 mg/L.

10. The process according to any one of the preceding claims, wherein the second amount of phosphate added to the separated lithium-bearing solution produced in step f) is sufficient to reduce a soluble calcium content of said lithium-bearing solution to less than 25 mg/L.

11. The process according to any one of the preceding claims, wherein
the third amount of phosphate added to the separated lithium-bearing solution produced in step g) is in stoichiometric excess to produce a lithium-depleted solution having a lithium content less than 500 mg/L and/or residual P content greater than 100 mg/L.

12. The process according to any one of the preceding claims, wherein prior to step j), the lithium phosphate precipitate is re-precipitated from phosphoric acid.

13. The process according to any one of the preceding claims, wherein the digestion mixture in step j) is heated to a temperature from ambient to 80 °C for 1-4 h.

14. The process according to anyone of the preceding claims, wherein the phosphate is selected from a group comprising phosphoric acid, potassium phosphate, sodium phosphate, ammonium phosphate or a combination thereof.

15. The process according to any one of the preceding claims, wherein the alkali metal hydroxide and the alkali metal phosphate comprise potassium hydroxide and potassium phosphate, respectively.

## Patentansprüche

1. Prozess zur Rückgewinnung von Lithiumphosphat und Lithiumsulfat aus einem lithiumhaltigen Silikat, umfassend die folgenden Schritte:
a) Zugeben von 800 kg/t bis 1600 kg/t Schwefelsäure zu einer Aufschlämmung des lithiumhaltigen Silikats und von 40 kg/t bis 400 kg/t einer Fluoridquelle, um eine Auslaugungsmischung herzustellen, und Erwärmen der Auslaugungsmischung;
b) Trennen einer lithiumhaltigen Lösung aus der Auslaugungsmischung;
c) Erhöhen des pH-Werts der getrennten lithiumhaltigen Lösung sequentiell auf pH 3,5 bis 4, pH 5,5 bis 6 und dann pH 10,5 bis 11, um einen ersten, zweiten bzw. dritten Satz von Verunreinigungen daraus auszufällen;
d) Trennen des ersten, zweiten und dritten Satzes von Verunreinigungen aus der in Schritt c) hergestellten lithiumhaltigen Lösung;
e) Zugeben von Kalk zu der in Schritt d) hergestellten getrennten lithiumhaltigen Lösung, um eine Konzentration an löslichem Calcium von mindestens 30 mg/L aufrechtzuerhalten;
f) Zugeben einer ersten Menge Phosphat zu der in Schritt e) hergestellten getrennten lithiumhaltigen Lösung, um Fluorapatit auszufällen, und Trennen und wahlweise Rückführen des Fluorapatits zu Schritt a) zur Verwendung als die Fluoridquelle;
g) Zugeben einer zweiten Menge Phosphat zu der getrennten lithiumhaltigen Lösung nach Schritt f), um Apatit auszufällen, und Trennen des Apatits;
h) Zugeben einer dritten Menge Phosphat zu der getrennten lithiumhaltigen Lösung nach Schritt g), um Lithiumphosphat auszufällen und eine an Lithium erschöpfte Lösung herzustellen;
i) Trennen der Lithiumphosphatausfällung von der in Schritt h) hergestellten an Lithium erschöpften Lösung;
j) Ausfällen von Lithiumsulfat aus einer Aufschlussmischung, die die getrennte Lithiumphosphatausfällung und Schwefelsäure umfasst, und Trennen von Lithiumsulfat aus der Aufschlussmischung; und
k) Zugeben von Alkalimetallhydroxid zu der getrennten Lösung aus Schritt j), um eine Alkalimetallphosphatlösung herzustellen, und Rückführen der Alkalimetallphosphatlösung in einen oder mehrere der Schritte f), g) und h) zur Verwendung als das Phosphat.

2. Prozess nach Anspruch 1, wobei die Aufschlämmung des lithiumhaltigen Silikats und der Fluoridquelle eine Feststoffdichte in einem Bereich von 20-50 Gew.-% aufweist.

3. Prozess nach Anspruch 1 oder Anspruch 2, wobei die Auslaugungsmischung auf eine Temperatur von 70 °C bis zu einem Siedepunkt der Auslaugungsmischung und/oder für einen Zeitraum von 1 bis 36 Stunden erwärmt wird.

4. Prozess nach einem der vorstehenden Ansprüche, wobei die Fluoridquelle aus einer Gruppe ausgewählt ist, die ein Fluoridsalz, ein fluoridhaltiges Salz, Fluorwasserstoffsäure oder eine fluoridhaltige Substanz umfasst, die in der Lage ist, durch Reaktion mit Schwefelsäure Fluorwasserstoffsäure zu erzeugen.

5. Prozess nach einem der vorstehenden Ansprüche, wobei vor Schritt c) die lithiumhaltige Lösung einem Vorneutralisierungsschritt unterzogen wird, der die Erhöhung des pH-Werts der lithiumhaltigen Lösung auf pH 1,0-1,5 umfasst.

6. Prozess nach einem der vorstehenden Ansprüche, wobei der erste Satz von Verunreinigungen einen oder mehrere von Al-, F-, Fe-, Cs- und/oder Rb-haltigen Feststoffen umfasst.

7. Prozess nach einem der vorstehenden Ansprüche, wobei der zweite Satz von Verunreinigungen Al-haltige Feststoffe mit Mitausfällung von Lithium umfasst, wobei vorzugsweise der getrennte zweite Satz von Verunreinigungen zu Schritt a) rückgeführt und der Aufschlämmung zugegeben wird, um die Gesamtlithiumverluste zu minimieren.

8. Prozess nach einem der vorstehenden Ansprüche, wobei der dritte Satz von Verunreinigungen einen oder mehrere Al-, Mg-, Mn- und/oder Si-haltige Feststoffe umfasst.

9. Prozess nach einem der vorstehenden Ansprüche, wobei:
die erste Menge an Phosphat, die der in Schritt e) hergestellten, getrennten lithiumhaltigen Lösung zugegeben wird, ausreichend ist, um Fluorapatit zu erzeugen und den Fluoridgehalt der lithiumhaltigen Lösung auf weniger als 5 mg/L zu erschöpfen.

10. Prozess nach einem der vorstehenden Ansprüche, wobei die zweite Phosphatmenge, die der in Schritt f) hergestellten getrennten lithiumhaltigen Lösung zugegeben wird, ausreichend ist, um den Gehalt an löslichem Calcium der lithiumhaltigen Lösung auf weniger als 25 mg/L zu reduzieren.

11. Prozess nach einem der vorstehenden Ansprüche, wobei
die dritte Phosphatmenge, die der in Schritt g) hergestellten getrennten lithiumhaltigen Lösung zugegeben wird, im stöchiometrischen Überschuss vorliegt, um eine an Lithium erschöpfte Lösung mit einem Lithiumgehalt von weniger als 500 mg/L und/oder einem P-Restgehalt von mehr als 100 mg/L herzustellen.

12. Prozess nach einem der vorstehenden Ansprüche, wobei vor dem Schritt j) die Lithiumphosphatausfällung aus Phosphorsäure neu ausgefällt wird.

13. Prozess nach einem der vorstehenden Ansprüche, wobei die Aufschlussmischung in Schritt j) 1-4 Stunden lang auf eine Temperatur von Umgebungstemperatur bis 80 °C erwärmt wird.

14. Prozess nach einem der vorstehenden Ansprüche, wobei das Phosphat aus einer Gruppe ausgewählt ist, die Phosphorsäure, Kaliumphosphat, Natriumphosphat, Ammoniumphosphat oder eine Kombination davon umfasst.

15. Prozess nach einem der vorstehenden Ansprüche, wobei das Alkalimetallhydroxid und das Alkalimetallphosphat Kaliumhydroxid bzw. Kaliumphosphat umfassen.

## Revendications

1. Procédé de récupération de phosphate de lithium et de sulfate de lithium à partir d'un silicate contenant du lithium comprenant les étapes consistant à :
a) ajouter de 800 kg/t à 1600 kg/t d'acide sulfurique à une bouillie du silicate contenant du lithium et de 40 kg/t à 400 kg/t d'une source de fluorure pour produire un mélange de lixiviation et chauffer ledit mélange de lixiviation ;
b) séparer une solution contenant du lithium du mélange de lixiviation ;
c) augmenter le pH de la solution contenant du lithium séparée de manière séquentielle à un pH de 3,5 à 4, un pH de 5,5 à 6 puis un pH de 10,5 à 11 pour précipiter, respectivement, un premier, un deuxième et un troisième ensemble d'impuretés à partir de celle-ci ;
d) séparer lesdits premier, deuxième et troisième ensembles d'impuretés de la solution contenant du lithium produite au cours de l'étape c) ;
e) ajouter de la chaux à la solution contenant du lithium séparée produite au cours de l'étape d) pour maintenir une concentration en calcium soluble d'au moins 30 mg/L ;
f) ajouter une première quantité de phosphate à la solution contenant du lithium séparée produite au cours de l'étape e) pour précipiter de la fluorapatite et séparer et facultativement réintroduire ladite fluorapatite dans l'étape a) pour l'utiliser en tant que source de fluorure ;
g) ajouter une deuxième quantité de phosphate à la solution contenant du lithium séparée après l'étape f) pour précipiter de l'apatite et séparer ladite apatite ;
h) ajouter une troisième quantité de phosphate à la solution contenant du lithium séparée après l'étape g) pour précipiter du phosphate de lithium et produire une solution appauvrie en lithium ;
i) séparer le précipité de phosphate de lithium de la solution appauvrie en lithium produite au cours de l'étape h) ;
j) précipiter le sulfate de lithium à partir d'un mélange de digestion comprenant le précipité de phosphate de lithium séparé et l'acide sulfurique et séparer le sulfate de lithium du mélange de digestion ; et
k) ajouter un hydroxyde de métal alcalin à la solution séparée à partir de l'étape j) pour produire une solution de phosphate de métal alcalin et réintroduire la solution de phosphate de métal alcalin dans une ou plusieurs quelconques des étapes f), g) et h) pour l'utiliser en tant que phosphate.

2. Procédé selon la revendication 1, dans lequel la bouillie du silicate contenant du lithium et de la source de fluorure présente une densité de solides dans une plage de 20-50 % en poids.

3. Procédé selon la revendication 1 ou la revendication 2, dans lequel le mélange de lixiviation est chauffé à une température allant de 70 °C à un point d'ébullition du mélange de lixiviation et/ou pendant une période de 1-36 h.

4. Procédé selon l'une quelconque des revendications précédentes, dans lequel la source de fluorure est sélectionnée dans un groupe comprenant un sel de fluorure, un sel contenant du fluorure, un acide fluorhydrique ou une substance contenant du fluorure susceptible de générer de l'acide fluorhydrique par réaction à l'acide sulfurique.

5. Procédé selon l'une quelconque des revendications précédentes, dans lequel, avant l'étape c), la solution contenant du lithium subit une étape de pré-neutralisation comprenant l'augmentation du pH de la solution contenant du lithium à un pH de 1,0-1,5.

6. Procédé selon l'une quelconque des revendications précédentes, dans lequel le premier ensemble d'impuretés comprend un ou plusieurs parmi des solides contenant Al, F, Fe, Cs et/ou Rb.

7. Procédé selon l'une quelconque des revendications précédentes, dans lequel le deuxième ensemble d'impuretés comprend des solides contenant AI avec une coprécipitation de lithium, de préférence dans lequel le deuxième ensemble d'impuretés séparé est réintroduit dans l'étape a) et ajouté à la bouillie pour réduire au minimum les pertes globales de lithium.

8. Procédé selon l'une quelconque des revendications précédentes, dans lequel le troisième ensemble d'impuretés comprend un ou plusieurs parmi des solides contenant Al, Mg, Mn et/ou Si.

9. Procédé selon l'une quelconque des revendications précédentes, dans lequel :
la première quantité de phosphate ajoutée à la solution contenant du lithium séparée produite au cours de l'étape e) est suffisante pour produire de la fluorapatite et réduire une teneur en fluorure de ladite solution contenant du lithium à moins de 5 mg/L.

10. Procédé selon l'une quelconque des revendications précédentes, dans lequel la deuxième quantité de phosphate ajoutée à la solution contenant du lithium séparée produite au cours de l'étape f) est suffisante pour réduire une teneur en calcium soluble de ladite solution contenant du lithium à moins de 25 mg/L.

11. Procédé selon l'une quelconque des revendications précédentes, dans lequel
la troisième quantité de phosphate ajoutée à la solution contenant du lithium séparée produite au cours de l'étape g) est en excès stoechiométrique pour produire une solution appauvrie en lithium ayant une teneur en lithium inférieure à 500 mg/L et/ou une teneur en P résiduel supérieure à 100 mg/L.

12. Procédé selon l'une quelconque des revendications précédentes, dans lequel, avant l'étape j), le précipité de phosphate de lithium est à nouveau précipité à partir d'acide phosphorique.

13. Procédé selon l'une quelconque des revendications précédentes, dans lequel le mélange de digestion au cours de l'étape j) est chauffé jusqu'à une température depuis une température ambiante jusqu'à 80 °C pendant 1-4 h.

14. Procédé selon l'une quelconque des revendications précédentes, dans lequel le phosphate est sélectionné dans un groupe comprenant l'acide phosphorique, le phosphate de potassium, le phosphate de sodium, le phosphate d'ammonium ou une combinaison de ceux-ci.

15. Procédé selon l'une quelconque des revendications précédentes, dans lequel l'hydroxyde de métal alcalin et le phosphate de métal alcalin comprennent respectivement de l'hydroxyde de potassium et du phosphate de potassium.
